# EUROPÄISCHE PATENTSCHRIFT

(11) **EP 0 870 925 B1**
(45) Veröffentlichungstag und Bekanntmachung des Hinweises auf die Patenterteilung: **20.11.2002**
(21) Anmeldenummer: 98106193.0
(22) Anmeldetag: 04.04.1998
(51) Int. Cl.: F04B 43/14, F04B 43/12

(54) **Rotationsverdrängerpumpe**
Rotary positive displacement pump
Pompe rotative à déplacement positif

(30) Priorität: 12.04.1997 DE 29706606 U
(43) Veröffentlichungstag der Anmeldung: 14.10.1998
(73) Patentinhaber: INOTEC GmbH Transport- und Fördersysteme, 79761 Waldshut-Tiengen (DE)
(72) Erfinder: Kammerer, Rolf, 75196 Remchingen-Wilferdingen (DE)
(74) Vertreter: Goy, Wolfgang, Dipl.-Phys.

(56) Entgegenhaltungen:
- EP-A- 0 026 704
- DE-A- 19 529 894
- DE-A- 19 715 250
- DE-U- 29 511 966
- DE-U- 29 609 865
- US-A- 4 648 812
- US-A- 4 909 710

## Beschreibung

Die Erfindung betrifft eine Rotationsverdrängerpumpe nach dem Oberbegriff des Patentanspruchs 1.

Die DE 296 09 865 U zeigt eine Rotationsverdrängerpumpe der zuvor angegebenen Art. Sie besteht aus einem Stator sowie aus einem Rotor. Der Stator weist eine Ringfläche mit Zulauf und Ablauf auf, welche von einer Membran zur Ausbildung eines Pumpkanals überdeckt ist. Auf der Membran befindet sich ein Kranz von einzeln gegen die Membran beweglichen Druckübertragungsgliedern, welche aus hochkant stehenden Plattenelementen gebildet sind. Weiterhin ist ein Rotor vorgesehen, welcher die konzentrische Achse der Ringfläche umläuft. Dieser Rotor weist zwei Rollen auf, welche auf der Oberseite der Druckübertragungsglieder laufen und dadurch die Membran fortlaufend lokal gegen die Ringfläche drükken, so daß die Membran den Weg vom Zulauf zum Ablauf fortschreitend unterbricht und das Pumpmaterial vor sich herschiebt. - Beim Betrieb dieser Pumpe treten Pulsationen auf, die durch das Zurücksaugen von dem Pumpmedium ausgelöst werden, nachdem die Rolle den Kranz der Druckübertragungsglieder überlaufen hat. Dies ist unerwünscht und führt sogar dazu, daß die Pumpe für manche Anwendungen ungeeignet ist.

Die US 4 648 812 A zeigt eine Vorrichtung zum Verhindern von Pulsationen in einer peristaltischen Fluid-Infusionspumpe. Zu diesem Zweck ist ein Schlauch mit Einlaßöffnung und Auslaßöffnung vorgesehen. Zur Erzeugung der Peristaltikbewegung sind auf einer Nockenwelle in einer Reihe hintereinander Druckglieder mit darin befindlichen exzentrischen Nocken angeordnet. Im Auslaßbereich des Schlauches sind zwei zusätzliche Druckübertragungsglieder angeordnet, deren Hübe kürzer eingestellt sind als die Hübe der vorgehenden Druckglieder. Dadurch werden Pulsationen verhindert, indem durch diese Zusatzglieder gegenphasige Pulsationen erzeugt werden.

Die Rotationsverdrängerpumpe aus der DE 295 11 966 U entspricht vom Grundprinzip her der Rotationsverdrängerpumpe aus der zuvor beschriebenen DE 296 09 865 U.

Die DE 195 29 894 A zeigt eine Peristaltikpumpe zur Förderung von flüssigen oder gasförmigen Medien, welche eine im wesentlichen konstante Förderrate aufweist. Zu diesem Zweck ist eine Hauptperistaltikeinheit mit nicht linearer Förderrate sowie eine Zusatzperistaltikeinheit mit variabler Förderrate vorgesehen. Diese beiden Einheiten sind derart aufeinander abgestimmt, daß eine Linearisierung der Gesamtförderrate erzielt wird. Dies geschieht entweder durch eine Schrägstellung der Andruckfläche der Zusatzperistaltikeinheit oder durch eine Abnahme der Amplitude der verwendeten Peristaltikschieber.

Die US 4 909 710 A zeigt eine lineare Peristaltikpumpe, bei der auf einer Welle Exzenternocken zusammen mit dadurch verschiebbaren Fingern angeordnet sind, welche in einer Peristaltikbewegung auf einen Schlauch drücken.

Die EP 0 026 704 A zeigt eine Peristaltikpumpe, bei welcher um eine zentrale Achse rotierende Kegel auf einem ringförmig angeordneten Schlauch abrollen.

Der Erfindung liegt die Aufgabe zugrunde, bei einer Rotationsverdrängerpumpe der eingangs angegebenen Art ein pulsationsarmes Arbeiten der Pumpe zu erzielen.

Die technische Lösung ist gekennzeichnet durch die Merkmale im Kennzeichen des Patentanspruchs 1.

Durch das erfindungsgemäße Verringern des Hubs der Membran im Übergangsbereich zwischen der Ringfläche und dem Ablauf springt die Membran verglichen mit dem übrigen Bereich des Pumpkanals nicht mehr so weit zurück, sobald die Rolle des Rotors über das letzte Druckübertragungsglied hinweggelaufen ist. Dadurch wird der Effekt verringert, daß das geförderte Medium durch ein Zurückschlagen der Membran wieder in den Pumpkanal zurückgesaugt wird. Dies führt zu einem pulsationsarmen, schonenden Betrieb der Pumpe, da sie nicht ständigen starken Rückschlagvibrationen ausgesetzt ist. Dies ist für bestimmte Anwendungen eine unabdingbare Voraussetzung, so beispielsweise beim Pumpen und Spritzen von feinem Lack, da ansonsten ein an einem Ablauf der Pumpe angeschlossener Spritzschlauch ständig zuckt und ein gleichmäßiges Spritzen nicht möglich ist. Darüber hinaus können aber auch noch grobkörnige Medien gepumpt werden. Technisch realisiert ist dieser verringerte Hub der Membran dadurch, daß die Membran permanent ausgelenkt ist.

Die Weiterbildung gemäß Anspruch 2 bewirkt, dass sich die Membran im Bereich zwischen dem vorspringen Teil und dem dem Pumpkanal abgewandten Ende des Ablaufs nicht bewegt. Dies bedeutet, dass kaum mehr eine Rücksaugwirkung auf das Pumpmedium vorhanden ist und vergrössert somit die Pulsationsarmut der Pumpe erheblich.

Die Weiterbildung gemäß Anspruch 3 führt dazu, dass der Hub der Membran geringer wird und somit die Rücksaugwirkung auf das Pumpmedium kleiner wird.

Die Weiterbildung gemäß Anspruch 4 vermeidet einen Knick in der Membran. Dies bedeutet, dass sich die Druckübertragungsglieder im Übergangsbereich zwischen der Ringfläche und dem Ablauf bei Annäherung an den Ablauf in ihrer zurückgezogenen Endstellung fortschreitend der Ringfläche nähern.

Die Weiterbildung gemäß Anspruch 5 gewährleistet, dass der Hub der einzelnen Druckübertragungsglieder gegen Ende des Pumpkanals zum Ablauf hin immer geringer wird. Dies führt zu einer Verringerung des Hubes der Membran im Bereich des Ablaufs, so dass die Rücksaugwirkung auf das Pumpmedium verringert wird.

Der gleiche Effekt, nämlich dass die Druckübertragungsglieder zum Ende des Pumpkanals hin weniger Hub aufweisen, wird durch die Weiterbildung gemäß Anspruch 6 erreicht.

Durch die Weiterbildung in Anspruch 7 verläuft die Membran diagonal über den Ablauf, so dass sie in diesem Bereich in ihrer zurückgezogenen Lage - d.h. bei nicht ausgelenkten Druckübertragungsgliedern - einen geringeren Abstand zur Flucht der Grundplatte aufweist als im übrigen Bereich des Pumpkanals. Dadurch wird bewirkt, dass der mögliche Hub über dem Ablauf, der durch ihren ausgelenkten und zurückgezogenen Endzustand definiert wird, geringer ist als im übrigen Bereich des Pumpkanals.

Durch die oben genannten vorteilhaften Weiterbildungen der Erfindung wird der Querschnitt des Pumpkanals in Richtung gegen den Ablauf verringert. Um trotzdem noch grobkörnige Medien pumpen zu können, schlägt Anspruch 8 eine technische Maßnahme vor. Dadurch wird der Pumpquerschnitt wieder etwas erhöht, ohne dass es zu einem Zuwachs an ungewollten Pulsationen kommt.

Durch die Weiterbildung gemäß Anspruch 9 schließlich wird erreicht, dass die Rücksaugwirkung auf das Pumpmedium abnimmt. Dies geschieht dadurch, dass durch den verringerten Querschnitt des Pumpkanals auch an seinem Übergang in den Ablauf die Rücksaugwirkung geringer ist als sie es bei einem grösseren Querschnitt des Pumpkanals an dieser Stelle wäre.

Weitere Vorteile der Erfindung ergeben sich aus dem in den beigefügten Zeichnungen dargestellten Ausführungsbeispiel. Es zeigt:

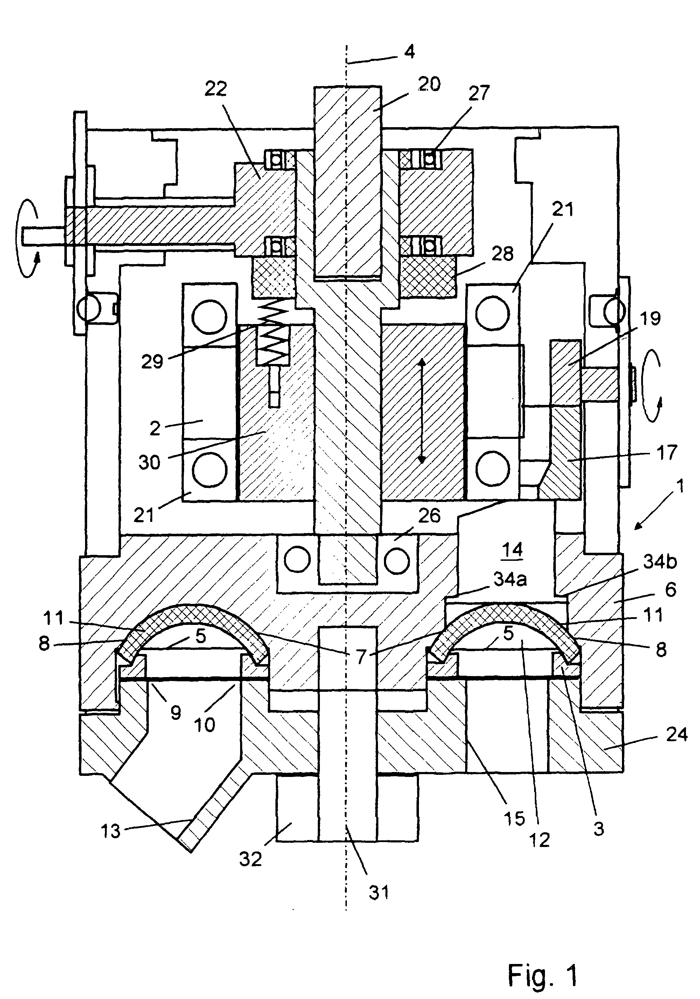

- Figur 1: einen Längsschnitt durch eine erfindungsgemässe Pumpe,
- Figur 2: einen Schnitt durch den Pumpkanal und die Druckübertragungsglieder entlang der Bahn der Rollen und
- Figur 3: einen Querschnitt durch zwei unterschiedliche Stössel in der Ebene der Figur 1.

Die Pumpe hat einen Stator 1 und einen Rotor 2. Der Stator 1 ist ein Teil des Gehäuses der Pumpe und weist eine Spannplatte 24, einen Niederhalter 6, eine Grundplatte 3 und eine Membran 11 auf. Die Grundplatte 3 ist ringförmig ausgebildet und koaxial zur Achse 4 des Rotors 2 angeordnet. Die Grundplatte 3 hat eine ebene Ringfläche 5, welche begrenzt wird durch zwei konische Klemmflächen 9 und 10, welche vom Rotor 2 aus gesehen hinter der Ringfläche 5 liegen; ihnen liegen zwei weitere Klemmflächen 7 und 8 gegenüber, die am Niederhalter 6 ausgebildet sind und mit den Klemmflächen 9 und 10 zusammenwirken, um dazwischen die Membran 11 einzuklemmen, welche aus einem elastomeren Werkstoff besteht, in entspanntem, nicht eingebautem Zustand ein ringförmiges, ebenes Gebilde ist und durch das Einspannen zwischen den konischen Klemmflächen 7 bis 10 gebogen wird, so dass sie die ebene Ringfläche 5 überwölbt. Genauso kann auch eine schon in ihrem nicht eingebauten Zustand gewölbte Membran 11 eingespannt werden. Zwischen der gewölbten und dadurch elastisch vorgespannten Membran 11 und der Ringfläche 5 ist auf diese Weise ein Pumpkanal 12 gebildet, in welchen ein Zulauf 13 und ein Ablauf 15 münden, welcher zweckmässigerweise dicht neben dem Zulauf 13 liegt und - nur um ihn darstellen zu können - in der Zeichnung in diagonaler Anordnung vorgesehen ist. Der Pumpkanal 12 ist auf dem kurzen Weg vom Zulauf 13 zum Ablauf 15 durch eine Erhebung 39 auf der ringförmigen Grundplatte 3 blockiert.

Auf der Aussenseite der Membran 11 ist ein Kranz von Druckübertragungsgliedern 14, im vorliegenden Ausführungsbeispiel sind dies Stössel, angeordnet. Die Stössel 14 sind im Längsschnitt T-förmig, erstrecken sich parallel zur Achse 4 und sind längs des gesamten Pumpkanals 12 angeordnet, der den Zulauf 13 mit dem Ablauf 15 verbindet, nicht aber über jenem Abschnitt der Membran 11, welcher in Drehrichtung des Rotors 2 vom Ablauf 15 zum Zulauf 13 führt, weil dort der Pumpkanal 12 durch die auf der ringförmigen Grundplatte 3 vorgesehene Erhebung 39 unterbrochen ist.

Die Stössel 14 sind im Niederhalter 6 parallel zur Achse 4 verschieblich angeordnet und durch einen Stellring 17 gesichert, welcher gegen die Rückstellkraft der Membran 11 in Richtung der Achse 4 mittels eines Exzenters 19 verlagerbar ist, so dass die Stössel 14 einen veränderlichen Endanschlag haben, der es gestattet, den maximalen Qürschnitt des Pumpkanals 12 zu verringern und damit die Förderleistung der Pumpe einzustellen.

Der Rotor 2 dreht sich um eine Welle 20, welche in einem Wälzlager 26 im Niederhalter 6 und in einem weiteren Wälzlager 27 im hinteren Gehäuseteil gelagert ist. Der Rotor 2 hat wenigstens zwei freilaufende Rollen 21 - neben freilaufenden Rollen 21 sind genauso angetriebene Rollen denkbar - welche über die Stössel 14 hinwegrollen und sie niederdrücken, wodurch die Membran 11 lokal an die Ringfläche 5 gedrückt wird. Diese lokale Andrückstelle wandert mit der Rotorbewegung längs des Pumpkanals 12, schiebt die davor stehende Flüssigkeitsmenge durch den Ablauf 15 hinaus und saugt gleichzeitig durch den Zulauf 13 weitere Flüssigkeit nach. Die Stössel 14 weisen zur Achse 4 hin Abschrägungen 40 auf, so dass sie von den Rollen 21 leichter nach unten gegen die Membran 11 gedrückt werden können.

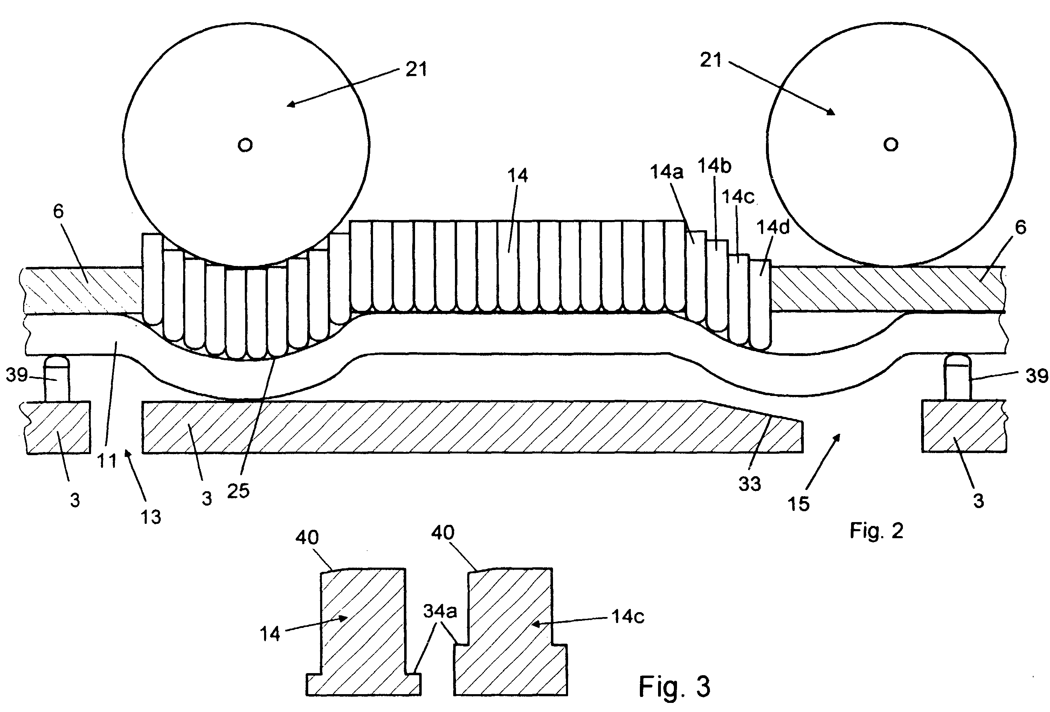

Die Membran 11 wird durch speziell dafür ausgebildete Stössel 14a-14d im Bereich des Ablaufes 15 niedergedrückt. Die Stössel 14a-14d sind deswegen unterschiedlich ausgebildet: Ihre Anschlagflächen 34a sind in verschiedenen Höhen - in Figur 3 zu erkennen - ausgebildet. Dadurch kann die Rückstellkraft der Membran 11 - nachdem die Rolle 21 über die Stössel 14a-14d hinweggerollt ist - die Stössel 14a-14d nur so weit nach oben drücken bis ihre Anschlagflächen 34a an den Anschlagflächen 34b des Niederhalters 6 anschlagen. Die Höhen der Anschlagflächen 34a der einzelnen Stössel 14a-14d sind so aufeinander abgestimmt, dass die Membran 11 nicht geknickt wird, sondern kurvenförmig verläuft. Um die Membran 11 gegen Verschleiss besser zu schützen, haben die Stössel 14 an ihrer der Membran 11 zugewandten Seite Rundungen 25 anstatt scharfer Kanten. Um den Qürschnitt des Pumpkanals 12 in diesem Bereich nicht zu klein werden zu lassen, ist die Grundplatte 3 in diesem Bereich mit einer Anschrägung 33 versehen, die zum Ablauf 15 hin abfällt. Durch diese Anordnung ist gewährleistet, dass die Pumpe pulsationsarm läuft, d.h., dass sie kein Pumpmedium wieder zurücksaugt, und gleichzeitig aber auch noch grobkörnige Medien gepumpt werden können. Noch preiswerter ist diese abfallende Anordnung der Stössel 14a-14d dadurch zu erreichen, dass die Anschlagfläche 34 zwischen Stössel 14 und Niederhalter 6 am Niederhalter 6 selbst schon während der Fertigung desselben variiert wird. Dies kann je nach Material des Niederhalters 6 durch ein geeignetes CNC-Fräsverfahren, oder eine geeignete Gussform erreicht werden.

Der Förderdruck der Pumpe hängt von der Vorspannung der Membran 11 ab. Diese Vorspannung hängt vom Material und der Dicke der Membran 11 ab, aber auch vom Ausmass ihrer Biegung. Darüberhinaus hängt der Förderdruck von der Kraft ab, mit welcher die Stössel 14 auf die Membran 11 einwirken. Sie kann mittels eines zweiten Exzenters 22 verändert werden, welcher über das hintere Wälzlager 27 auf einen Kragen 28 an der Welle 20 einwirkt und dadurch eine Feder 29 mehr oder weniger spannt, welche auf dem axial verschieblichen Träger 30 der Rollen 21 lastet. Durch Verdrehen des Exzenters 22 z.B. mittels eines an der Aussenseite angebrachten Handrades kann die Kraft, mit welcher die Rollen 21 auf die Membran 11 einwirken, erhöht oder erniedrigt werden. Bei exzessivem Druckaufbau unter der Membran 11 können die Stössel 14 dem Druck ausweichen, soweit die Druckkraft die durch Verdrehen des Exzenters 22 veränderliche Rückstellkraft der Feder 29 übersteigt.

Die Verspannung der Membran 11 geschieht mittels eines Gewindebolzens 31, welcher in den Niederhalter 6 eingedreht ist, sich durch die Spannplatte 24 erstreckt und eine Mutter 32 trägt, die, wenn sie angezogen wird, die Spannplatte 24 gegen die Grundplatte 3 und damit die Grundplatte 3 gegen den Rand der Membran 11 drückt. Ebenso besteht die Möglichkeit zur Verspannung der Membran 11 statt der Mutter 32 auf einen Schnellspannverschluss zurückzugreifen. Damit werden die Membran 11 und die Grundplatte 3 eingespannt und gleichzeitig der Pumpkanal 12 abgedichtet. Falls bei einem Verschleiss die Membran 11 und/oder die Grundplatte 3 ausgetauscht werden müssen, muss lediglich die Mutter 32 gelöst werden. Danach kann die Spannplatte 24 abgenommen werden und die Grundplatte 3 und die Membran 11 sind frei zugänglich. Der Verschleiss tritt in erster Linie an der harten Grundplatte 3 auf und äussert sich infolge des Abriebs von der Grundplatte 3 in einer Vergrösserung des Pumpkanals 12, die ihrerseits eine Verringerung des Förderdrucks nach sich zieht. Am Absinken des Förderdrucks kann man daher leicht erkennen, wann ein Austausch erforderlich ist.

## Patentansprüche

1. Rotationsverdrängerpumpe
mit einem eine Ringfläche (5) aufweisenden Stator (1),
wobei sich die Ringfläche (5) zumindest über einen Teil eines Vollkreises erstreckt,
wobei weiterhin in der Ringfläche (5) ein Zulauf (13) mündet und von der Ringfläche (5) ein Ablauf (15) abgeht,
wobei weiterhin die Ringfläche (5) von einer Membran (11) zur Ausbildung eines Pumpkanals (12) überdeckt ist
und wobei schließlich eine Kranz von einzeln gegen die Membran (11) sowie Ringfläche (5) beweglichen Druckübertragungsgliedern (14) insbesondere aus hochkant stehenden Plattenelementen vorgesehen ist,
sowie mit einem über den Druckübertragungsgliedern (14) angeordneten sowie um die konzentrische Achse (4) der Ringfläche (5) umlaufenden Rotor (2),
wobei der Rotor (2) mindestens eine Rolle (21) aufweist, welche auf der Rückseite der Druckübertragungsglieder (14) läuft und dadurch die Membran (11) derart fortlaufend lokal gegen die Ringfläche (5) drückt, daß die Membran (11) den Weg vom Zulauf (13) zum Ablauf (15) fortschreitend unterbricht und das Pumpmaterial vor sich herschiebt,
**dadurch gekennzeichnet,**
**dass** im Übergangsbereich zwischen der Ringfläche (5) und dem Ablauf (15) der Hub der Membran (11) kleiner ist als im übrigen Bereich des Pumpkanals (12), indem die Membran (11) verglichen mit ihrer Ausgangsstellung im übrigen Bereich des Pumpkanals (12) permanent in Richtung Ringfläche (5) ausgelenkt und damit der Querschnitt des Pumpkanals (12) verglichen mit dem übrigen Bereich des Pumpkanals (12) permanent verringert ist.

2. Rotationsverdrängerpumpe nach dem vorhergehenden Anspruch,
**dadurch gekennzeichnet,**
**dass** die Membran (11) durch ein in Richtung der Ringfläche (5) vorspringendes, in dem Übergangsbereich oder über dem Ablauf (15) angeordnetes Teil, insbesondere durch die Druckübertragungsglieder (14a - 14d) permanent ausgelenkt ist.

3. Rotationsverdrängerpumpe nach dem vorhergehenden Anspruch,
**dadurch gekennzeichnet,**
**dass** der Hub der letzten ablaufseitigen Druckübertragungsglieder (14a -14d) geringer ist als jener der übrigen Druckübertragungsglieder (14).

4. Rotationsverdrängerpumpe nach einem der vorhergehenden Ansprüche,
**dadurch gekennzeichnet,**
**dass** der Abstand der Druckübertragungsglieder (14) in ihren zurückgezogenen Endstellungen von der Ringfläche (5) im Übergangsbereich zwischen der Ringfläche (5) und dem Ablauf (15) bei Annäherung an den Ablauf (15) von Druckübertragungsglied (14a) zu Druckübertragungsglied (14d) fortschreitend kleiner wird.

5. Rotationsverdrängerpumpe nach einem der vorhergehenden Ansprüche,
**dadurch gekennzeichnet,**
**dass** zwischen den Druckübertragungsgliedern (14) und einem Niederhalter (6) des Stators (1) in axialer Richtung sich gegenüberliegende Anschlagflächen (34a, 34b) ausgebildet sind, an denen die Druckübertragungsglieder (14) in ihrer zurückgezogenen Endstellung an den Niederhalter (6) anschlagen und die Anschlagflächen (34a) der ablaufseitigen Druckübertragungsglieder (14a -14d) gegen den Ablauf (15) hin fortschreitend weiter vom membranseitigen Ende der Druckübertragungsglieder entfernt sind.

6. Rotationsverdrängerpumpe nach Anspruch 5,
**dadurch gekennzeichnet,**
**dass** die Anschlagfläche (34b) des Niederhalters (6) zum Ablauf (15) hin in Richtung Ringfläche (5) abfällt.

7. Rotationsverdrängerpumpe nach einem der vorhergehenden Ansprüche,
**dadurch gekennzeichnet,**
**dass** die Membran (11) auf der dem Pumpkanal (12) abgewandten Seite des Ablaufs (15) an einer Grundplatte (3) des Stators (1) befestigt ist.

8. Rotationsverdrängerpumpe nach einem der vorhergehenden Ansprüche,
**dadurch gekennzeichnet,**
**dass** die Ringfläche (5) am ablaufseitigen Ende des Pumpkanals (12) in den Ablauf (15) abfallend abgeschrägt ist.

9. Rotationsverdrängerpumpe nach einem der Ansprüche 1 bis 7,
**dadurch gekennzeichnet,**
**dass** der Abstand zwischen der Ringfläche (5) und der Membran (11) in ihrer zurückgezogenen Endstellung im Übergangsbereich zwischen der Ringfläche (5) und dem Ablauf (15) zum Ablauf (15) hin abnimmt.

## Claims

1. Rotary displacement pump with a stator (1) having a ring surface (5), where the ring surface (5) extends over at least part of a full circle, where also a supply (13) opens into the ring surface (5) and an outlet (15) leads from the ring surface (5), where also the ring surface (5) is covered by a membrane (11) to form a pump channel (12) and where finally a crown is provided of pressure transfer elements (14) which are individually movable against the membrane (11) and ring surface (5) and consist in particular of upright plate elements, and with a rotor (2) arranged above the pressure transfer elements (14) and rotating about the concentric axis (4) of the ring surface (5), where the rotor (2) has at least one roller (21) which runs on the back of the pressure transfer elements (14) whereby the membrane (11) is pressed continuously locally against the ring surface (5) such that the membrane (11) progressively interrupts the path from the supply (13) to the outlet (15) and pushes the pump material before it, **characterised in that** in the transitional area between the ring surface (5) and the outlet (15), the travel of the membrane (11) is less than in the remaining area of the pump channel (12), where the membrane (11) in relation to the starting position is permanently deflected in the direction of the ring surface (5) in the remaining area of the pump channel (12) and hence the cross-section of the pump channel (12) is permanently reduced in relation to the remaining area of the pump channel (12).

2. Rotary displacement pump according to the previous claim, **characterised in that** the membrane (11) is permanently deflected by a part, in particular by the pressure transfer elements (14a-14d), projecting in the direction of the ring surface (5) and arranged in the transitional area or above the outlet (15) .

3. Rotary displacement pump according to the previous claim, **characterised in that** the travel of the last pressure transfer element on the outlet side (14a, 14d) is less than that of the other pressure transfer elements (14).

4. Rotary displacement pump according to any of the previous claims, **characterised in that** the spacing of the pressure transfer elements (14) in their retracted end position from the ring surface (5), in the transition area between the ring surface (5) and the outlet (15), becomes progressively smaller from pressure transfer element (14a) to pressure transfer element (14d) on approach to the outlet (15).

5. Rotary displacement pump according to any of the previous claims, **characterised in that** between the pressure transfer elements (14) and a retainer (6) of the stator (1) are formed stop surfaces (34a, 34b) opposite each other in the axial direction, on which the pressure transfer elements (14) stop in their retracted end position on the retainer (6), and the stop surfaces (34a) of the outlet side pressure transfer elements (14a, 14d) towards the outlet (15) become progressively further remote from the membrane side end of the pressure transfer elements.

6. Rotary displacement pump according to claim 5, **characterised in that** the stop surface (34b) of the retainer (6) falls away towards the outlet (15) in the direction of the ring surface (5).

7. Rotary displacement pump according to any of the previous claims, **characterised in that** the membrane (11), on the side of the outlet (15) facing away from the pump channel (12), is attached to a base plate (3) of the stator (1).

8. Rotary displacement pump according to any of the previous claims, **characterised in that** the ring surface (5), on the outlet side end of the pump channel (12), is chamfered falling away into the outlet (15).

9. Rotary displacement pump according to any of the claims 1 to 7, **characterised in that** the distance between the ring surface (5) and the membrane (11) in its retracted end position, in the transition area between the ring surface (5) and the outlet (15), decreases towards the outlet (15).

## Revendications

1. Pompe volumétrique rotative,
avec un stator (1) présentant une surface annulaire (5),
la surface annulaire (5) s'étendant au moins sur une partie d'un cercle complet,
une admission (13) débouchant en outre dans la surface annulaire (5) et une évacuation (15) partant de la surface annulaire (5),
la surface annulaire (5) étant en outre recouverte par une membrane (11) afin de former un canal de pompage (12),
et enfin une couronne d'organes de transmission de pression (14) individuellement mobiles vers la membrane (11) ainsi que vers la surface annulaire (5) étant prévue, organes qui consistent notamment en des éléments en forme de plaques placées de chant, ainsi qu'avec un rotor (2) disposé au-dessus des organes de transmission de pression (14) et rotatif autour de l'axe concentrique (4) de la surface annulaire (5),
le rotor (2) présentant au moins un galet (21) qui roule sur le côté arrière des éléments de transmission de pression (14) et presse ainsi en continu la membrane (11) localement contre la surface annulaire (5) de telle sorte que la membrane (11) interrompt le passage de l'admission (13) vers l'évacuation (15) par une interruption progressive, et pousse devant elle le matériau pompé,
**caractérisée en ce que** la course de la membrane (11) est moindre dans la région de transition entre la surface annulaire (5) et l'évacuation (15) que dans la région restante du canal de pompage (12), par le fait que la membrane (11) est, par rapport à sa position initiale dans la région restante du canal de pompage (12), déviée en permanence en direction de la surface annulaire (5), de sorte que la section du canal de pompage (12) est en permanence réduite par rapport à la région restante du canal de pompage (12).

2. Pompe volumétrique rotative selon la revendication précédente, **caractérisée en ce que** la membrane (11) est déviée en permanence par un élément saillant en direction de la surface annulaire (5), disposé dans la région de transition ou au-dessus de l'évacuation (15), notamment par les organes de transmission de pression (14a à 14d).

3. Pompe volumétrique rotative selon la revendication précédente, **caractérisée en ce que** la course des derniers organes de transmission de pression côté évacuation (organes 14a à 14d) est moindre que celle des autres organes de transmission de pression (14).

4. Pompe volumétrique rotative selon l'une quelconque des revendications précédentes, **caractérisée en ce que** la distance entre les organes de transmission de pression (14) dans leurs positions finales rétractées et la surface annulaire (5) diminue progressivement dans la région de transition entre la surface annulaire (5) et l'évacuation (15) tandis qu'on se rapproche de l'évacuation (15), de l'organe de transmission de pression (14a) à l'organe de transmission de pression (14d).

5. Pompe volumétrique rotative selon l'une quelconque des revendications précédentes, **caractérisée en ce que** des faces de butée (34a, 34b) en vis-à-vis en direction axiale sont formées entre les organes de transmission de pression (14) et un serre-flan (6) du stator (1), sur lesquelles les organes de transmission de pression (14) viennent buter contre le serre-flan (6) dans leurs positions finales rétractées, et les faces de butée (34a) des organes de transmission de pression (14a à 14d) côté évacuation sont progressivement, vers l'évacuation (15), plus éloignées de l'extrémité côté membrane des organes de transmission de pression.

6. Pompe volumétrique rotative selon la revendication 5, **caractérisée en ce que** la face de butée (34b) du serre-flan (6), vers l'évacuation (15), descend en pente en direction de la surface annulaire (5).

7. Pompe volumétrique rotative selon l'une quelconque des revendications précédentes, **caractérisée en ce que** la membrane (11) est fixée, sur le côté de l'évacuation (15) qui est opposé au canal de pompage (12), à une plaque de base (3) du stator (1).

8. Pompe volumétrique rotative selon l'une quelconque des revendications précédentes, **caractérisée en ce que** la surface annulaire (5) est à l'extrémité côté évacuation du canal de pompage (12), chanfreinée avec une pente descendant dans l'évacuation (15).

9. Pompe volumétrique rotative selon l'une quelconque des revendications 1 à 7, **caractérisée en ce que** la distance entre la surface annulaire (5) et la membrane (11) dans sa position finale rétractée diminue dans la région de transition entre la surface annulaire (5) et l'évacuation (15), vers l'évacuation (15).
